(19) **Europäisches Patentamt European Patent Office Office européen des brevets**

(11) **EP 3 544 804 B1**

(12) **EUROPEAN PATENT SPECIFICATION**

(45) Date of publication and mention of the grant of the patent:
**15.01.2025 Bulletin 2025/03**

(21) Application number: **17783877.8**

(22) Date of filing: **17.10.2017**

(51) International Patent Classification (IPC):
**B32B 7/06** (2019.01)     **B32B 27/08** (2006.01)
**B32B 27/30** (2006.01)     **B32B 27/32** (2006.01)
**B32B 27/34** (2006.01)     **B32B 27/36** (2006.01)
**A61J 1/00** (2023.01)

(52) Cooperative Patent Classification (CPC):
**B32B 27/08; B32B 7/06; B32B 27/302;**
**B32B 27/304; B32B 27/306; B32B 27/32;**
**B32B 27/34; B32B 27/36; B32B 27/365;**
B32B 2270/00; B32B 2307/31; B32B 2307/40;
B32B 2307/412; B32B 2307/51; B32B 2307/732;
(Cont.)

(86) International application number:
**PCT/EP2017/076416**

(87) International publication number:
**WO 2018/095657 (31.05.2018 Gazette 2018/22)**

(54) **PEELABLE SEAL LAYER**

ABZIEHBARE VERSIEGELUNGSSCHICHT

COUCHE DE JOINT PELABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.11.2016 EP 16200529**

(43) Date of publication of application:
**02.10.2019 Bulletin 2019/40**

(73) Proprietor: **Amcor Flexibles Transpac BVBA 3545 Halen (BE)**

(72) Inventors:
• **VERLODT, Ingeborg**
  **9920 Lovendegem (BE)**
• **MALFAIT, Tony**
  **8880 Rollegem-Kapelle (BE)**

(74) Representative: **Vossius & Partner Patentanwälte Rechtsanwälte mbB Siebertstraße 3 81675 München (DE)**

(56) References cited:
EP-A1- 1 312 470       EP-A2- 0 732 108
WO-A1-01/15897        WO-A1-2010/125570
WO-A1-2013/078351     US-A1- 2010 247 824

(52) Cooperative Patent Classification (CPC): (Cont.)
B32B 2307/748; B32B 2439/80

## Description

### Field of the Invention

The invention relates to multilayer films that can be heat sealed to substrates, providing peelable transparent seals between the films and the substrates.

### State of the Art

Peelable seals between polymeric films and a variety of surfaces are well known in the packaging art, for example for the packaging of foodstuffs and medical equipment, and are for example disclosed in US 6,245,176 B1; EP 0 258 527 A1 and EP 0 746 468 A1.

The ability to peel such seals generally facilitates the opening of sealed packages and in addition, such seals often provide tamper evidence once they have been peeled.

The mechanism by which such seals can be peeled and the force required to do so will usually depend on the materials involved in forming the heat seal. Peeling will either involve separation at the boundary between different materials in the seal area or the internal rupture of a polymeric layer through the seal area.

The ability of the seal to peel through the seal area in general depends on both the composition of the heat-seal layer and on the compatibility at the interface between the seal layer and the surface to which it is sealed.

Thus, the incompatibility at the interface between the seal layer and the surface to which it is sealed can range from high, with the result that unacceptably low seal strengths result, to low, with the resulting heat seals being so strong that they will not peel before tearing of the film occurs.

Internal rupture through the layer thickness of the seal layer upon peeling will occur for a seal layer based on a partially miscible polymer blend having compatibility with the films to which it is heat sealed.

GB 1350290 discloses a wrapping film capable of forming peelable seals comprising 20 to 80 % by weight of a heat-sealable rigid polymer (A) (e.g. homopolymer of ethylene) which, in film form, has an elasticity modulus in excess of 3,000 kg/cm$^2$, measured according to ASTM D 882-67; 0.1 to 50 % by weight of a non heat-sealable polymer (B) (e.g. homopolymer of styrene or copolymer of styrene and butadiene or mixtures thereof), which does not form a solution with polymer (A); 0.1 to about 30 % by weight of a heat-sealable branched chain polymer (C) (e.g. polyethylene) which, in film form, has an elasticity modulus below 3,000 kg/cm$^2$ measured according to ASTM D 882-67; and 0 to 45 % by weight of a polymer (D) (e.g. copolymer of ethylene and methyl acrylate) compatible with polymers (A), (B) and (C), the sum of the polymers (A), (B), (C) and (D) representing 100 % by weight of the polymeric material. The peelable seals may comprise 0 to 45 % by weight referred to the total of polymers (A), (B), (C) and (D), mineral fillers such as talc. The film may be used as the only wrapping material or it may be used to form complex films by lamination onto other films such as polyethylene, polypropylene, halogenated polymers, polyamides, polycarbonates, polystyrene, or the like.

EP 0 024 270 discloses a heat-sealable packaging film producing a peelable seal on a wide range of packaging films, the peelable seal layer comprising: (a) 55 to 95 % by weight of at least one ethylene polymer selected from polyethylene having a density of from 0.91 to 0.93 g/cm$^3$ and an ethylene-vinyl acetate copolymer containing at most 10 % by weight of vinyl acetate, (b) 5 to 30 % by weight of polystyrene, and (c) 0 to 20 % by weight of a thermoplastic, elastomeric styrene-butadiene-styrene or styrene-isoprene-styrene block copolymer.

This type of packaging peel film does not any longer satisfy the request of modern coextruded multilayer films that require properties like inclusions of oxygen barriers or tear-free peelable film/paper combinations, tamper evidence, a broad cohesive peel-seal window, transparency, sterilisability by irradiation or ethylene oxide and hot tack.

WO 01/15897 discloses a heat sealing film having a haze of no more than 30 % and having a sealant layer comprising

- 50 to 100 % by weight of a polymer blend, said polymer blend comprising:

    - 5 to 50 % by weight of a block copolymer of from 50 to 95 % by weight of a styrene-type hydrocarbon and from 5 to 50 % by weight of a conjugated diene-type hydrocarbon,
    - 5 to 50 % by weight of an ethylene/ α-olefin random copolymer, and
    - 5 to 70 % by weight of a block copolymer of from 10 to 50 % by weight of a styrene-type hydrocarbon and from 50 to 90 % by weight of a conjugated diene-type hydrocarbon, and

- 0 to 50 % by weight of an impact-resistant polystyrene.

The document does not address the problem of a peelable film.

WO 2005/005540 discloses a homogenous blend comprising 10 to 90 % by weight of a metallocene catalyzed ethylene polymer, and from 10 to 90 % by weight of a styrene-butadiene block copolymer having from 5 to 40 % by weight of 1,3-butadiene monomer units and from 60 to 95 % by weight styrene monomer units, wherein the styrene-butadiene block copolymer has a transmittance of 91 % and a haze of 3 %, both measured according to ASTM D1003. The seal layer does not comprise polystyrene and the peeling consists in a separation of the seal layer from the substrate at the boundary i.e. in the original plane of joining the two films.

For medical applications in particular, the peel film is required to be tamper evident and the cohesive failure mechanism during opening of the packaging has to occur without zipping, fiber tear or angel hairs. This means that the peel trace should be smooth and exempt from all kind of visual disruptions. Furthermore, the film must be peelable on various substrates.

In order to meet most of these criteria, a seal layer comprising an incompatible polymer blend or the introduction of an intermediate layer between the seal layer and the (multi)layer film have been disclosed.

EP 0 971 819 A1 discloses a heat-sealable polymeric film comprising an outer, polymeric heat-seal layer, an intermediate polymeric layer in contact with the heat-seal layer, the intermediate polymeric layer being capable of cohesively splitting when the heat-sealed film is peeled, and at least one further polymeric layer. The heat-seal layer is obtained from a blend containing 70 to 95 % by weight of polyethylene or ethylene/propylene copolymer and 5 to 30 % by weight of an additive such as an alphamethyl styrene resin, a vinyltoluene/alpha-methyl styrene resin or a modified aromatic resin. The intermediate layer comprises a blend of 35 to 85 % by weight of polyethylene or ethylene/propylene copolymer and 15 to 65 % by weight of talc, wherein polyethylene or ethylene/propylene copolymer partially may be replaced by an incompatible polymer.

EP 1 312 470 discloses a heat-sealable coextruded multilayer packaging film peelable on a variety of substrates including polyethylene, polypropylene, polyester, polyvinyl chloride, polyamide, polyacrylonitrile and paper, comprising at least one peelable layer from a pre-compounded precursor formulation containing 50 to 80 % by weight of an ethylene homo and/or copolymer; 15 to 25 % by weight of a styrene homo or/and copolymer; and 5 to 20 % by weight of a thermoplastic elastomeric styrene-butadiene-styrene block copolymer. The peel force in the peelable seal film is modified by the presence of 5 to 25 % by weight of homogeneously branched linear low density polyethylene and/or polybutene-1. D3 however does not deal with clarity or haze of the seal layer.

While a consistent peel force over a wide temperature range in combination with a clean peel is obtained, a particular problem is faced related to the optical properties.

Thin film extrusion blends of incompatible polymers in general result in hazy films, related to the differences in refractive index, thus limiting their usage in applications where optical aspects and transparency is not critical. In medical applications such as the packaging of pre-filled syringes, where clear look-through is important and where clear bottom webs, like glycol modified polyethylene terephthalate, are applied, hazy seal layers hardly can be permitted.

Therefore it is important to develop a heat-sealable coextruded multilayer packaging film comprising a transparent heat-seal layer peelable on a variety of substrates by cohesively splitting.

## Aims of the invention

The present invention aims to provide heat-sealable multilayer film for the production of heat-sealable packages that do not present the drawbacks of the heat-sealable films of the state of the art.

The present invention aims to provide heat-sealable multilayer film for the production of heat-sealable packages, said heat-sealable multilayer film having a cohesively peelable seal layer with increased clarity and reduced haze relative to the state of the art peelable seal layers.

## Summary of the invention

The present invention discloses a heat-sealable multilayer film (A) comprising:

a) a support layer comprising at least one polymeric layer;
b) a peelable seal layer of polymer blend, said blend comprising:

- 50 to 80 % by weight of an ethylene polymer;
- 10 to 40 % by weight of a styrene polymer; and
- 5 to 30 % by weight of a styrene-butadiene block copolymer, characterized by small-amplitude oscillatory shear flow measurements, wherein the average of the elastic or storage compliance at a frequency of 10 rad/s ($J'_{10}$) and the elastic or storage compliance at a frequency of 100 rad/s ($J'_{100}$) is at least $10^{-5}$ Pa$^{-1}$, preferably at least 12 $10^{-6}$ Pa$^{-1}$ measured at a temperature of 160°C on a dynamic plate/plate rheometer.

Preferred embodiments of the present invention disclose one or more of the following features:

- the support layer (a) comprises at least one polymer layer selected from the group consisting of polyamide, polyester, polycarbonate, polyvinyl chloride, polypropylene, low density polyethylene, medium density polyethylene, polyester-glycol copolymer and ethylene vinyl acetate;
- the polymer blend of the peelable seal layer (b) comprises:

  - 50 to 80 % by weight of polyethylene, preferably low density polyethylene;
  - 10 to 40 % by weight of a polystyrene; and
  - 5 to 30 % by weight of a styrene-butadiene block copolymer wherein the styrene content is comprised between 10 and 85 % by weight, preferably between 15 and 80 % by weight, more preferably between 20 and 75 % by weight of styrene component;

- the peelable seal layer (b) represents 25 % or less, preferably 20 % or less, more preferably 15 % or less of the total thickness of (A);
- the thickness of the peelable seal layer (b) is comprised between 2 and 15 $\mu$m, preferably between 3 and 10 $\mu$m;
- the peelable seal layer (b) has a clarity percentage of at least 30 %, preferably of at least 35 %, more preferably of at least 40 % and a haze percentage of less than 70 %, preferably of less than 65 %, more preferably of less than 60 %, wherein clarity and haze are measured according to ASTM 0-1003;
- the peelable seal layer (b) has an increase in clarity of at least 200 %, preferably of at least 230 %, more preferably of at least 260 % and a reduction in haze of at least 20 %, preferably of at least 24 %, more preferably of at least 28 % relative to the clarity and haze values of a peelable seal layer of polymer blend, of the same thickness, said blend comprising:

  - 50 to 80 % by weight of an ethylene polymer;
  - 10 to 40 % by weight of a styrene polymer; and
  - 5 to 30% by weight of a styrene-butadiene block copolymer, characterized by small-amplitude oscillatory shear flow measurements in that the average of the elastic or storage compliance at a frequency of 10 rad/s (J'10) and the elastic or storage compliance at a frequency of 100 rad/s (J'100) is less than 10-5 Pa-1, preferably less than 9 10-6 Pa-1, measured at a temperature of 160°C on a dynamic plate/plate rheometer,

  wherein clarity and haze are measured according to ASTM D-1003.

The present invention further discloses a heat-sealed package comprising the heat-sealable multilayer film (A) and a substrate (B), in contact with the heat-seal layer (b), said substrate (B) comprising at least one layer selected from the group consisting of polyamide, polyester, polycarbonate, polyvinyl chloride, polypropylene, polyethylene, polyacrylonitrile, polyester-glycol copolymer, ethylene vinyl acetate and high impact polystyrene.

Preferred embodiments of the heat-sealed package of the present invention disclose one or more of the following features:

- the layer of substrate (B) in contact with the seal layer (b) of the heat-sealable multilayer film (A) is selected from the group consisting of low density polyethylene, medium density polyethylene, high density polyethylene, glycol modified polyethylene terephthalate and the seal layer (b);
- that the peel strength for separating the multilayer film (A) and the substrate (B) is 3.5 N/10mm or less, preferably 3.0 N/10mm or less, more preferably 2.5 N/10mm or less, the rupture being internal the peelable seal layer (b).

The present invention further discloses a method for producing the heat-sealed package, comprising contacting the substrate (B) with the heat-seal layer (b) of the heat-sealable multilayer film (A) and sealing at a temperature comprised between 100 and 180 °C, preferably between 120 and 160 °C using a dwell time comprised between 0.2 and 3 seconds, preferably between 0.5 and 2 seconds and a pressure comprised between 100 and 600 kPa, preferably between 150 and 400 kPa, and cooling down the heat-sealed package.

Preferred embodiments of the method for producing the heat-sealed package of the present invention disclose:

- the heat-sealable multilayer film (A) is prepared by co-extruding the at least one polymer layer of support layer (a) and the polymer blend of the peelable seal layer (b), said polymer blend being obtained from a high shear extrusion;
- the peelable seal layer (b) is subjected to a plasma treatment, preferably a corona plasma treatment, before contacting with the substrate (B);
- the corona treatment is adjusted to provide a surface energy of at least 36 mN/m, preferably of at least 38 mN/m, more of at least 40 mN/m, according to ASTM D2578.

The present invention further discloses the use of the heat-sealed package for medical packaging application.

## Description of the Invention

According to the present invention there is provided a heat-sealable multilayer film (A) comprising a support layer (a), said support layer (a) comprising at least one polymeric layer and a peelable seal layer (b) of a polymer blend comprising an ethylene polymer, a styrene polymer and a styrene-butadiene block copolymer complying with specific rheological properties, as further defined, said seal layer (b) being characterized by a cohesively splitting upon peeling and additionally by an increased clarity and a reduced haze relative to the state of the art seal layers.

The peelable seal layer (b) of the present invention comprises a polymer blend comprising:

- 50 to 80 % by weight of an ethylene polymer;
- 10 to 40 % by weight of a styrene polymer; and
- 5 to 30 % by weight of a styrene-butadiene block copolymer, said block copolymer being characterized by small-amplitude oscillatory shear flow measurements in that the average of the elastic or storage compliance at a frequency of 10 rad/s ($J'_{10}$) and the elastic or storage compliance at a frequency of 100 rad/s ($J'_{100}$) is at least $10^{-5}$ Pa$^{-1}$, preferably at least 12 $10^{-6}$ Pa$^{-1}$, measured at a temperature of 160 °C on a TA Instruments dynamic plate/plate rheometer for a plate diameter of 20 mm and a die gap of 1.8 mm.

Following J.D. Ferry in "Viscoelastic Properties of Polymers", J. Wiley & Sons (1980) p.13, the elastic or storage compliance is given by:

$$J' = (1/G') / (1 + \tan^2 \delta)$$

wherein:

tan $\delta$ = G"/G' being the loss tangent;
G" = ($\sigma_0/\gamma_0$) sin $\delta$ being the shear viscous or loss modulus;
G' = ($\sigma_0/\gamma_0$) cos $\delta$ being the shear elastic or storage modulus;
$\sigma_0$ is the stress amplitude;
$\gamma_0$ is the strain amplitude; and
$\delta$ is the phase lag.

$\sigma_0$, $\gamma_0$ and $\delta$ vary with the oscillation frequency and are common output of dynamic rheology measurements.

In order to carry out the measurements, the styrene butadiene block copolymer crumbs are pressed into a disk with a diameter of 20 mm and a height of 1.8 mm.

By "ethylene polymer", the present invention means homopolymers of ethylene and copolymers made from the copolymerization of ethylene and one or more ethylenically unsaturated monomers selected from the group consisting of (meth)acrylate esters, vinyl alkanoates and alpha olefins.

Polyethylene of the peelable heat-seal layer (b) is preferably selected from the group consisting of low density polyethylene, linear low density polyethylene, high density polyethylene, poly(ethylene vinylacetate), poly(ethylene methyl acrylate) and poly(ethylene butyl acrylate). Polyethylene of the pealable heat-seal layer (b) more preferably is low density polyethylene.

By "styrene polymer", the present invention means general-purpose (also known as glass-clear) polystyrene (GPPS), high impact polystyrene (HIPS), anionically polymerized polystyrene and the copolymers made from the copolymerization of styrene and one or more monomers selected from the group consisting of alpha-methylstyrene, acrylonitrile, butadiene and (alkyl) (meth)acrylate.

By "styrene-butadiene block copolymer", the present invention means any type of block copolymer, such as a linear, a di-block, a radial or a branched block copolymer, preferably prepared by the anionic polymerization method. The styrene/butadiene block copolymers for being used in the heat-seal layer (b) of the present invention, preferably have a styrene content of 10 % by weight or more, more preferably between 15 and 80 % by weight, most preferably between 20 and 75 % by weight and further are characterized by a weight average molecular weight (Mw) preferably comprised between 20 kDa and 300 kDa, more preferably between 30 kDa and 200 kDa as determined by gel permeation chromatography in tetrahydrofuran against polystyrene standards.

The styrene-butadiene block copolymer of the present invention preferably is a thermoplastic elastomer copolymer, characterized in that the average of the elastic or storage compliance, describing its elastic properties, measured at a frequency of 10 rad/s ($J'_{10}$) at a temperature of 160°C and the elastic or storage compliance, measured at a frequency of 100 rad/s ($J'_{100}$) at a temperature of 160 °C, is at least $10^{-5}$ Pa$^{-1}$, preferably at least 12 $10^{-6}$ Pa$^{-1}$.

The inventors have surprisingly found that the average of elastic or storage compliance at a frequency of 10 rad/s and 100 rad/s is the key parameter for the seal layer (b) benefitting from an increased clarity and a reduced haze, as measured according to ASTM 0-1003 with a Haze Gardner from Braive Instruments, wherein:

- clarity percentage, indicative for the narrow angle scattering, is defined as the percentage of the light intensity, in passing through the layer, measured at the center of the sensor ($I_C$), minus the light intensity measured outside the center of the sensor ($I_R$), divided by the light intensity measured at the center of the sensor ($I_C$), plus the light intensity measured outside the center of the sensor ($I_R$), i.e. 100%. $(I_C - I_R)/(I_C + I_R)$;
- haze percentage, indicative for the wide angle scattering, is defined as the percentage of transmitted light that, in passing through the layer, deviating by more than 2.5° from the incident light ($T_{dif}$) (diffused transmitted light) divided by the transmitted light ($T_T$) (total transmitted light), i.e. 100% . $T_{dif} / T_T$.

The seal layer (b) of the heat-sealable multilayer film (A) of the present invention is characterized by a clarity percentage of at least 30 %, preferably of at least 35 %, more preferably of at least 40 % and a haze percentage of less than 70 %, preferably of less than 65 %, more preferably of less than 60 %, wherein clarity and haze are measured according to ASTM D-1003.

The peelable heat-seal layer (b) of the multilayer film (A) of the present invention is cohesively splitting upon peeling. By cohesively splitting the present invention means splitting through the heat-sealed layer (b), i.e. an internal rupture of the seal layer (b), contrary to adhesively splitting involving separation at the boundary between seal layer (b) and support layer (a) or between seal layer (b) and the substrate (B) to which it is sealed.

The seal layer (b) of the heat-sealable multilayer film (A) of the present invention is characterized by an increased clarity percentage and a reduced haze percentage, measured according to ASTM 0-1003, relative to the clarity percentage and haze percentage of a heat-sealable layer of the prior art comprising:

- 50 to 80 % by weight of an ethylene polymer;
- 10 to 40 % by weight of a styrene polymer; and
- 5 to 30 % by weight of a styrene-butadiene block copolymer, characterized in that the average of the elastic or storage compliance at a frequency of 10 rad/s ($J'_{10}$) and the elastic or storage compliance at a frequency of 100 rad/s ($J'_{100}$) is less than $10^{-5}$ Pa$^{-1}$, preferably less than $9 \cdot 10^{-6}$ Pa$^{-1}$, measured at a temperature of 160 °C on a dynamic plate/plate rheometer.

The increase in clarity percentage relative to an identical seal layer composition except for the styrene-butadiene block copolymer type, is at least 200 %, preferably at least 230 %, more preferably of at least 260 % and is given by: 100 . (clarity % invention / clarity % prior art).

The reduction of haze percentage relative to an identical seal layer composition except for the styrene-butadiene block copolymer type, is at least 20 %, preferably of at least 24 %, more preferably of at least 28 % and is given by: 100 . (haze % pior art - haze % invention) / haze % prior art.

A proper selection of the styrene-butadiene block copolymer allows for an increase in clarity percentage, relative to an identical seal layer composition except for the styrene-butadiene block copolymer type, of at least 300 % and even at least 350 % and a reduction in haze percentage of at least 35 % and even at least 40 %.

In general, the increase in clarity percentage and the reduction in haze percentage, as defined in the present invention, is obtained from a styrene butadiene block copolymer characterized by an average of the elastic or storage compliance at a frequency of 10 rad/s and the elastic or storage compliance at a frequency of 100 rad/s, which is at least 1.5 times, preferably at least 1.7 times, more preferably at least 2 times higher versus a prior art styrene butadiene block copolymer where a haze percentage of more than 80 % and a clarity percentage of less than 20 % is observed for the peelable seal layer (b) comprising said prior art styrene butadiene block copolymer.

The heat-sealable multilayer film (A) of the present invention comprises a support layer (a), said support layer (a) preferably comprising at least one polymer layer selected from the group consisting of polyamide, polyester, polycarbonate, polyvinyl chloride, polypropylene, low density polyethylene, medium density polyethylene, polyester-glycol copolymer and ethylene vinyl acetate.

The support layer (a) in general is characterized by an overall thickness comprised between 3 and 100 $\mu$m, preferably between 5 and 80 $\mu$m.

The heat-sealable multilayer film (A) in general is characterized in that the peelable seal layer (b) represents 25 % or less, preferably 20 % or less, more preferably 15 % or less of the total thickness of (A).

The heat-sealable multilayer film (A) is characterized in that the thickness of the peelable seal layer (b) is comprised between 2 and 15 $\mu$m, preferably between 3 and 10 $\mu$m.

The heat-sealable multilayer film (A) of the present invention is used for the production of peelable heat-sealed packages through heat sealing said multilayer film (A) to a substrate (B).

Said substrate (B) being part of the heat-sealed package according to the present invention comprises one or more polymeric films selected from the group consisting of polyamide, polyester, polycarbonate, polyvinyl chloride, polypropylene, polyethylene, polyacrylonitrile, polyester-glycol copolymer, ethylene vinyl acetate and high impact polystyrene

Optionally, the substrate (B) may be metallized or comprise a metallic foil, a coated paper or a fibrous substrate such as uncoated paper, paperboard, cellulosic non-woven, polymeric non-woven or woven fabric.

Optionally, the substrate (B) comprises a peelable seal layer said layer comprising:

- 50 to 80 % by weight of an ethylene polymer;
- 10 to 40 % by weight of a styrene polymer; and
- 5 to 30 % by weight of a styrene-butadiene block copolymer, said block copolymer being characterized by small-amplitude oscillatory shear flow measurements in that the average of the elastic or storage compliance at a frequency of 10 rad/s ($J'_{10}$) and the elastic or storage compliance at a frequency of 100 rad/s ($J'_{100}$) is at least $10^{-5}$ $Pa^{-1}$, preferably at least 12 $10^{-6}$ $Pa^{-1}$, measured at a temperature of 160°C on a TA Instruments dynamic plate/plate rheometer for a plate diameter of 20 mm and a die gap of 1.8 mm.

The substrate (B) for being used in the heat-sealable package may be the heat-sealable multilayer film (A) of the present invention.

The heat-sealable multilayer film (A) of the present invention has the particularity of being heat sealable to a substrate (B) comprising a low density polyethylene, medium density polyethylene, or glycol modified polyethylene terephthalate such as 1,4-cyclohexanedimethanol modified polyethylene terephthalate (Eastar™ Copolyester EN001 from Eastman) layer as the contact layer to the peelable layer (b) of the heat-sealable multilayer film (A). For the particular case of glycol modified polyethylene terephthalate, plasma treatment of the peelable seal layer (b) is recommended.

Peelable packages produced from the multilayer films (A) and the above substrates (B) have shown peel strengths, for separating the multilayer film (A) and the substrate (B), of 3.5 N/10mm or less, preferably 3.0 N/10mm or less, more preferably 2.5 N/10mm or less, the rupture being internal the peelable seal layer (b). Peeling forces are measured with an Instron tensile tester at a 90 ° peel angle with an opening speed of 300 mm/min.

Multilayer films in accordance with the present invention can be produced by known methods. However, it is generally preferred to produce them by coextruding melts of the polymers and additives required for the various layers of the final films, followed by cooling to solidify the polymers in the form of a film.

Films in accordance with the present invention can also be produced by coextrusion coating of the heat-seal layer (b) on to a suitable support layer (a).

The heat-sealable multilayer film (A) of the present invention may be used for the production of peelable heat-sealed packages through heat sealing said multilayer film to a substrate at a temperature comprised between 100 and 180 °C, preferably between 120 and 160 °C using a dwell time comprised between 0.2 and 3 seconds, preferably between 0.5 and 2 seconds and a pressure comprised between 100 and 600 kPa, preferably between 150 and 400 kPa.

For the particular case where the substrate (B) is the heat-sealable multilayer film (A) of the present invention, the peelable seal layer (b) of the multilayer film (A) is contacted and sealed to the peelable seal layer (b) of the substrate (B).

The heat-seal layer (b) of the multilayer film (A) preferably is subjected a plasma treatment, more preferably a corona plasma treatment, at a frequency power in the range of 10 to 30 kHz, adjusted to provide a surface energy of at least 36 mN/m, preferably of at least 38 mN/m, more of at least 40 mN/m, according to ASTM D2578.

Preferably the heat-seal layer (b) is subjected to a plasma treatment just before contacting and heat sealing to the substrate (B).

Plasma treatment may be omitted for the particular case where the contact layer of substrate (B) to the peelable layer (b) of the heat-sealable multilayer film (A) is a polyethylene, a polypropylene or the peelable seal layer (b).

## Examples

The following illustrative examples are merely meant to exemplify the present invention but is not destined to limit or otherwise define the scope of the present invention.

Films (A) were extruded at a net width of 500 mm and with a total thickness of 50 μm by using a 150 mm 7-layer Egan-Davis conical blown film die. Each layer had a separate extruder. The peelable layer (b), with composition as in Table 1, was extruded with a 45 mm W&H single screw extruder at the inside of the bubble and with a layer thickness equal to 10 % of the total film thickness.

The heat-sealable multilayer film (A) subsequently was contacted and sealed to a substrate (B), said substrate (B) being either the heat-sealable multilayer film (A), the peelable layer (b) of the multilayer films contacting each other, or a 200 μm thick glycol modified polyethylene terephthalate sheet, the peelable layer (b) of the heat-sealable multilayer film (A) contacting the glycol modified polyethylene terephthalate sheet (B). For the latter case, the peelable layer (b) of the heat-sealable multilayer film (A) was Corona treated, providing a surface energy of about 38 mN/m.

The multilayer films were sealed with a Kopp sealer; the upper jaw was heated at 140 °C while the lower contained a shore 60A rubber at room temperature. Sealing was performed at a 200 kPa pressure with a dwell time of 1 second. In order to avoid elastic deformation the film was protected against the upper jaw with an oriented polyethylene/polyethylene terephthalate laminate of 60 $\mu$m thickness.

Peeling forces were measured with an Instron tensile tester at a 90 ° peel angle with an opening speed of the clamps equal to 300 mm/min and shown in Table 1.

The clarity and haze were measured with a Haze Gardner from Braive Instruments NV, according to ASTM 0-1003 and shown in Table 1.

Small-amplitude oscillatory shear flow measurements were performed on styrene-butadiene block copolymer, in the linear visco-elastic region with the TA Instruments AR2000 dynamic plate-plate rheometer installed at 160°C. The plate diameter is 20 mm and the applied die-gap was 1.8 mm. Prior to measurement, styrene-butadiene crumbs were pressed in disks with the diameter equal to the rheometer plates. The elastic or storage compliance (J') was measured at 10 and 100 rad/s; the average is shown in Table 1.

In Table 1:

Col.1: indicates the identification number of the example
Col.2: indicates the type of ethylene polymer
Col.3: indicates the weight percentage of the ethylene polymer in the peelable seal layer (b)
Col.4: indicates the type of styrene polymer
Col.5: indicates the weight percentage of the styrene polymer in the peelable seal layer (b)
Col.6: indicates the type of styrene-butadiene block copolymer
Col.7: indicates the weight percentage of the styrene-butadiene block copolymer polymer in the peelable seal layer (b)
Col.8: indicates: indicates the haze percentage, measured according to ASTM D-1003 of the peelable seal layer (b)
Col.9: indicates the clarity percentage, measured according to ASTM D-1003 of the peelable seal layer (b)
Col.10: indicates the peel strength, in N/10 mm, measured for separating multilayer film (A) from multilayer film (A) for the case wherein the heat-sealable multilayer film (A) is sealed to the same heat-sealable multilayer film (A), the peelable seal layers (b) contacting each other
Col.11: indicates the peel strength, in N/10 mm, measured for separating multilayer film (A) from substrate (B), for the case wherein the heat-sealable multilayer film (A) is sealed to the 200 $\mu$m thick glycol modified polyethylene terephthalate sheet (B), the peelable layer (b) of the heat-sealable multilayer film (A) contacting the glycol modified polyethylene terephthalate sheet (B)
Col.12: indicates the average, in $10^{-6}$ Pa$^{-1}$, of the elastic or storage compliance (J'$_{10}$) at a frequency of 10 rad/s and the elastic or storage compliance (J'$_{100}$) at a frequency of 100 rad/s (J'$_{10}$ + J'$_{100}$)/2 measured at a temperature of 160°C on a dynamic plate/plate rheometer
Col.13: indicates the visual evaluation of the seal layer wherein (--) stands for opacified cloudy seal layer; (++) stands for transparent seal layer and (+) stands for a transparent seal layer showing slight turbidity.

In Table 1, Examples 1, 2, 7 and 8 are comparative [(J'$_{10}$ + J'$_{100}$)/2 < $10^{-5}$ Pa$^{-1}$]: they all are characterized by a haze percentage above 80 % and a clarity percentage of less than 15 %, contrary to Examples 3, 4, 5 and 6 [(J'$_{10}$ + J'$_{100}$)/2 > $10^{-5}$ Pa$^{-1}$], characterized by a haze percentage lower than 60 % and a clarity percentage of more than 35 %.

Comparing Example 6 (according to the invention) to Example 2 (comparative) shows an increase in clarity percentage of more than 330 % and a haze percentage reduction of more than 40 %.

From columns 10 and 11, it appears that the selection criteria for clarity and haze [i.e. (J'$_{10}$ + J'$_{100}$)/2 of the styrene-butadiene block copolymer > $10^{-5}$ Pa$^{-1}$] has no significant influence of the peel strength.

Table 1

| Column 1 | 2 | 3 | 4 | 5 | 6 | 7 | 8 | 9 | 10 | 11 | 12 | 13 |
|---|---|---|---|---|---|---|---|---|---|---|---|---|
| Ex 1 | Total FE8000 | 65 | Total PS1340 | 21 | Dynasol Solprene 416 | 14 | 80.2 | 13.7 | 1.8 | 1.5 | 7.6 | -- |

(continued)

| Column 1 | 2 | 3 | 4 | 5 | 6 | 7 | 8 | 9 | 10 | 11 | 12 | 13 |
|---|---|---|---|---|---|---|---|---|---|---|---|---|
| Ex 2 | Total FE8000 | 65 | Total PS1340 | 21 | Dynasol Calprene 710 | 14 | 86.5 | 14.0 | 2.2 | 1.6 | 8.8 | -- |
| Ex 3 | Total FE8000 | 65 | Total PS1340 | 21 | Kraton D1155E | 14 | 52.5 | 46.3 | 2.0 | 2.8 | 17.7 | ++ |
| Ex 4 | Total FE8000 | 65 | Total PS1340 | 21 | Dynasol Calprene 540 | 14 | 55.1 | 40.2 | 2.0 | 1.6 | 29.1 | ++ |
| Ex 5 | Total FE8000 | 65 | Total PS1340 | 21 | Styroflex 2G66 | 14 | 57.5 | 39.0 | 0.8 | 0.7 | 13.5 | + |
| Ex 6 | Sabic 2201TH00 | 67 | Total PS1340 | 20 | Kraton D1155E | 13 | 50.1 | 47.0 | 1.9 | 2.5 | 17.7 | ++ |
| Ex 7 | Dow 310E | 72 | Total PS1340 | 20 | Dynasol Calprene 710 | 8 | 82.1 | 15.0 | 2.4 | 1.1 | 8.8 | -- |
| Ex 8 | Dow 310E | 57 | Total PS1340 | 35 | Dynasol Calprene 710 | 8 | 84.2 | 14.2 | 0.8 | 0.7 | 8.8 | -- |

## Claims

1. A heat-sealable multilayer film (A) comprising:

   a) a support layer comprising at least one polymeric layer;
   b) a peelable seal layer of polymer blend, said blend comprising:

   - 50 to 80% by weight of an ethylene polymer;
   - 10 to 40% by weight of a styrene polymer; and
   - 5 to 30% by weight of a styrene-butadiene block copolymer, **characterized in that** the average of the elastic or storage compliance at a frequency of 10 rad/s ($J'_{10}$) and the elastic or storage compliance at a frequency of 100 rad/s ($J'_{100}$) is at least $10^{-5}$ Pa$^{-1}$, preferably at least $12 \cdot 10^{-6}$ Pa$^{-1}$ measured at a temperature of 160°C on a dynamic plate/plate rheometer for a plate diameter of 20 mm and a die gap of 1.8 mm, wherein:

$$J' = (1/G') / (1 + \tan^2\delta)$$

   with:

   $\tan \delta = G''/G'$ ;
   $G''$ being the viscous or loss modulus; and
   $G'$ being the elastic or storage modulus.

2. The heat-sealable multilayer film (A) according to Claim 1 wherein the support layer (a) comprises at least one polymer layer selected from the group consisting of polyamide, polyester, polycarbonate, polyvinyl chloride, polypropylene, low density polyethylene, medium density polyethylene, polyester-glycol copolymer and ethylene vinyl acetate.

3. The heat-sealable multilayer film (A) according to Claim 1 or 2 wherein the polymer blend of the peelable seal layer (b) comprises:

   - 50 to 80% by weight of polyethylene, preferably low density polyethylene;
   - 10 to 40% by weight of a polystyrene; and

- 5 to 30% by weight of a styrene-butadiene block copolymer wherein the styrene content is comprised between 10 and 85% by weight, preferably between 15 and 80% by weight, more preferably between 20 and 75% by weight of styrene component.

4. The heat-sealable multilayer film (A) according to any of the preceding claims, **characterized in that** the peelable seal layer (b) represents 25% or less, preferably 20% or less, more preferably 15% or less of the total thickness of (A).

5. The heat-sealable multilayer film (A) according to any of the preceding claims, wherein the thickness of the peelable seal layer (b) is comprised between 2 and 15 $\mu$m, preferably between 3 and 10 $\mu$m.

6. The heat-sealable multilayer film (A) according to any of the preceding claims wherein the peelable seal layer (b) has a clarity percentage of at least 30%, preferably of at least 35%, more preferably of at least 40% and a haze percentage of less than 70%, preferably of less than 65%, more preferably of less than 60%, wherein clarity and haze are measured according to ASTM 0-1003.

7. The heat-sealable multilayer film (A) according to any of the preceding claims wherein the peelable seal layer (b) has an increase in clarity of at least 200%, preferably of at least 230%, more preferably of at least 260% and a reduction in haze of at least 20%, preferably of at least 24%, more preferably of at least 28% relative to the clarity and haze values of a peelable seal layer of polymer blend, of the same thickness, said blend comprising:

   - 50 to 80% by weight of an ethylene polymer;
   - 10 to 40% by weight of a styrene polymer; and
   - 5 to 30% by weight of a styrene-butadiene-styrene block copolymer, **characterized in that** the average of the elastic or storage compliance at a frequency of 10 rad/s ($J'_{10}$) and the elastic or storage compliance at a frequency of 100 rad/s ($J'_{100}$) is less than $10^{-5}$ Pa$^{-1}$, preferably less than $9 \cdot 10^{-6}$ Pa$^{-1}$, measured at a temperature of 160°C on a dynamic plate/plate rheometer,

   wherein clarity and haze are measured according to ASTM 0-1003.

8. A heat-sealed package comprising the heat-sealable multilayer film (A) according to any of the preceding claims and a substrate (B), in contact with the heat-seal layer (b), said substrate (B) comprising at least one layer selected from the group consisting of polyamide, polyester, polycarbonate, polyvinyl chloride, polypropylene, polyethylene, polyacrylonitrile, polyester-glycol copolymer, ethylene vinyl acetate and high impact polystyrene.

9. The heat-sealed package according to Claim 8, wherein the layer of substrate (B) in contact with the seal layer (b) of the heat-sealable multilayer film (A) is selected from the group consisting of low density polyethylene, medium density polyethylene, high density polyethylene, glycol modified polyethylene terephthalate and seal layer (b).

10. The heat-sealed package according to Claim 8 or 9, **characterized in that** the peel strength for separating the multilayer film (A) and the substrate (B) is 3.5 N/10mm or less, preferably 3.0 N/10mm or less, more preferably 2.5 N/10mm or less, the rupture being internal the peelable seal layer (b), the peeling forces being measured at a 90 ° peel angle with an opening speed of 300 mm/min.

11. Method for producing the heat-sealed package according to any of claims 8 to 10, comprising contacting the substrate (B) with the heat-seal layer (b) of the heat-sealable multilayer film (A) of Claims 1 to 7 and sealing at a temperature comprised between 100 and 180°C, preferably between 120 and 160°C using a dwell time comprised between 0.2 and 3 seconds, preferably between 0.5 and 2 seconds and a pressure comprised between 100 and 600 kPa, preferably between 150 and 400 kPa., and cooling down the heat-sealed package.

12. The method according to Claim 11 comprising the additional step of preparing the heat-sealable multilayer film (A), as defined in Claim 1, by co-extruding the at least one polymer layer of support layer (a) and the polymer blend of the peelable seal layer (b), said polymer blend being obtained from a high shear extrusion.

13. The method according to Claim 11 or 12 comprising the additional step of subjecting the peelable seal layer (b) to a plasma treatment, preferably a corona plasma treatment, before contacting with the substrate (B).

14. The method according to any of Claims 11 to 13, wherein the corona treatment is adjusted to provide a surface energy of at least 36 mN/m, preferably of at least 38 mN/m, more of at least 40 mN/m, according to ASTM D2578.

**15.** Use of the heat-sealed package according to Claims 8 to 10, for medical packaging application.


**Patentansprüche**

**1.** Heißsiegelbare Mehrschichtfolie (A), umfassend:

a) eine Trägerschicht, die mindestens eine Polymerschicht umfasst;
b) eine abziehbare Siegelschicht aus Polymerblend, wobei das Blend umfasst:

- 50 bis 80 Gew.-% eines Ethylenpolymers;
- 10 bis 40 Gew.-% eines Styrolpolymers; und
- 5 bis 30 Gew.-% eines Styrol-Butadien-Blockcopolymers, **dadurch gekennzeichnet, dass** der Mittelwert der elastischen Nachgiebigkeit oder der Speichernachgiebigkeit bei einer Frequenz von 10 rad/s ($J'_{10}$) und der elastischen Nachgiebigkeit oder der Speichernachgiebigkeit bei einer Frequenz von 100 rad/s ($J'_{100}$) mindestens $10^{-5}$ Pa$^{-1}$, vorzugsweise mindestens $12 \cdot 10^{-6}$ Pa$^{-1}$ beträgt, gemessen bei einer Temperatur von 160 °C auf einem dynamischen Platten/Platten-Rheometer für einen Plattendurchmesser von 20 mm und einen Düsenspalt von 1,8 mm, wobei:

$$J' = (1/G')/(1 + \tan^2\delta)$$

mit:

$\tan 5 = G''/G'$;
$G''$ der viskose Modul oder Verlustmodul ist; und
$G'$ der Elastizitäts- oder Speichermodul ist.

**2.** Heißsiegelbare Mehrschichtfolie (A) nach Anspruch 1, wobei die Trägerschicht (a) mindestens eine Polymerschicht umfasst, die aus der Gruppe ausgewählt ist, die aus Polyamid, Polyester, Polycarbonat, Polyvinylchlorid, Polypropylen, Polyethylen niedriger Dichte, Polyethylen mittlerer Dichte, Polyester-Glykol-Copolymer und Ethylen-Vinylacetat besteht.

**3.** Heißsiegelbare Mehrschichtfolie (A) nach Anspruch 1 oder 2, wobei das Polymerblend der abziehbaren Siegelschicht (b) umfasst:

- 50 bis 80 Gew.-% Polyethylen, vorzugsweise Polyethylen niedriger Dichte;
- 10 bis 40 Gew.-% eines Polystyrols; und
- 5 bis 30 Gew.-% eines Styrol-Butadien-Blockcopolymers, wobei der Styrolgehalt zwischen 10 und 85 Gew.-%, vorzugsweise zwischen 15 und 80 Gew.-%, stärker bevorzugt zwischen 20 und 75 Gew.-% an Styrolkomponente liegt.

**4.** Heißsiegelbare Mehrschichtfolie (A) nach einem der vorhergehenden Ansprüche, **dadurch gekennzeichnet, dass** die abziehbare Siegelschicht (b) 25 % oder weniger, vorzugsweise 20 % oder weniger, stärker bevorzugt 15 % oder weniger der Gesamtdicke von (A) ausmacht.

**5.** Heißsiegelbare Mehrschichtfolie (A) nach einem der vorhergehenden Ansprüche, wobei die Dicke der abziehbaren Siegelschicht (b) zwischen 2 und 15 pm, vorzugsweise zwischen 3 und 10 pm, umfasst ist.

**6.** Heißsiegelbare Mehrschichtfolie (A) nach einem der vorhergehenden Ansprüche, wobei die abziehbare Siegelschicht (b) einen Transparenzanteil von mindestens 30 %, vorzugsweise von mindestens 35 %, stärker bevorzugt von mindestens 40 % und einen Trübungsanteil von weniger als 70 %, vorzugsweise von weniger als 65 %, stärker bevorzugt von weniger als 60 % aufweist, wobei Transparenz und Trübung gemäß ASTM D-1003 gemessen werden.

**7.** Heißsiegelbare Mehrschichtfolie (A) nach einem der vorhergehenden Ansprüche, wobei die abziehbare Siegelschicht (b) eine Zunahme der Transparenz von mindestens 200 %, vorzugsweise von mindestens 230 %, stärker bevorzugt von mindestens 260 % und eine Verringerung der Trübung von mindestens 20 %, vorzugsweise von mindestens 24 %, stärker bevorzugt von mindestens 28 % relativ zu den Transparenz- und Trübungswerten einer abziehbaren Siegelschicht aus Polymerblend derselben Dicke aufweist, wobei das Blend umfasst:

- 50 bis 80 Gew.-% eines Ethylenpolymers;
- 10 bis 40 Gew.-% eines Styrolpolymers; und
- 5 bis 30 Gew.-% eines Styrol-Butadien-Styrol-Blockcopolymers, **dadurch gekennzeichnet, dass** der Mittelwert der elastischen Nachgiebigkeit oder der Speichernachgiebigkeit bei einer Frequenz von 10 rad/s ($J'_{10}$) und der elastischen Nachgiebigkeit oder der Speichernachgiebigkeit bei einer Frequenz von 100 rad/s ($J'_{100}$) kleiner als $10^{-5}$ Pa$^{-1}$, vorzugsweise kleiner als $9\ 10^{-6}$ Pa$^1$, gemessen bei einer Temperatur von 160 °C auf einem dynamischen Platten/Platten-Rheometer, ist,

wobei die Transparenz und die Trübung gemäß ASTM D-1003 gemessen werden.

8. Heißversiegelte Verpackung, umfassend die heißsiegelbare Mehrschichtfolie (A) nach einem der vorhergehenden Ansprüche und ein Substrat (B), das in Kontakt mit der Heißsiegelschicht (b) steht, wobei das Substrat (B) mindestens eine Schicht umfasst, die aus der Gruppe ausgewählt ist, die aus Polyamid, Polyester, Polycarbonat, Polyvinylchlorid, Polypropylen, Polyethylen, Polyacrylnitril, Polyester-Glykol-Copolymer, Ethylen-Vinylacetat und hochschlagzähem Polystyrol besteht.

9. Heißversiegelte Verpackung nach Anspruch 8, wobei die Schicht des Substrats (B) in Kontakt mit der Versiegelungsschicht (b) der heißsiegelbaren Mehrschichtfolie (A) aus der Gruppe ausgewählt ist, die aus Polyethylen niedriger Dichte, Polyethylen mittlerer Dichte, Polyethylen hoher Dichte, mit Glycol modifiziertem Polyethylenterephthalat und der Versiegelungsschicht (b) besteht.

10. Heißsiegelpackung nach Anspruch 8 oder 9, **dadurch gekennzeichnet, dass** die Abziehfestigkeit zum Trennen der Mehrschichtfolie (A) und des Substrats (B) 3,5 N/10 mm oder weniger, vorzugsweise 3,0 N/10 mm oder weniger, stärker bevorzugt 2,5 N/10 mm oder weniger beträgt, wobei der Bruch innerhalb der abziehbaren Siegelschicht (b) liegt, wobei die Abziehkräfte unter einem Abziehwinkel von 90° bei einer Öffnungsgeschwindigkeit von 300 mm/min gemessen werden.

11. Verfahren zur Herstellung der heißversiegelten Verpackung nach einem der Ansprüche 8 bis 10, umfassend Kontaktieren des Substrats (B) mit der Heißsiegelschicht (b) der heißsiegelbaren Mehrschichtfolie (A) nach den Ansprüchen 1 bis 7 und Versiegeln bei einer Temperatur zwischen 100 und 180 °C, vorzugsweise zwischen 120 und 160 °C, unter Verwendung einer Verweilzeit zwischen 0,2 und 3 Sekunden, vorzugsweise zwischen 0,5 und 2 Sekunden, und bei einem Druck zwischen 100 und 600 kPa, vorzugsweise zwischen 150 und 400 kPa, und Abkühlen der heißgesiegelten Verpackung.

12. Verfahren nach Anspruch 11, umfassend den zusätzlichen Schritt: Herstellen der heißsiegelfähigen Mehrschichtfolie (A), wie in Anspruch 1 definiert, durch Coextrudieren der mindestens einen Polymerschicht der Trägerschicht (a) und des Polymerblends der abziehbaren Versiegelungsschicht (b), wobei das Polymerblend aus einer Extrusion mit hoher Scherkraft erhalten wird.

13. Verfahren nach Anspruch 11 oder 12, umfassend den zusätzlichen Schritt: Unterziehen der abziehbaren Versiegelungsschicht (b) einer Plasmabehandlung, vorzugsweise einer Coronaplasmabehandlung, vor Kontaktieren mit dem Substrat (B).

14. Verfahren nach einem der Ansprüche 11 bis 13, wobei die Coronabehandlung angepasst wird, um eine Oberflächenenergie von mindestens 36 mN/m, vorzugsweise von mindestens 38 mN/m, stärker bevorzugt von mindestens 40 mN/m, gemäß ASTM D2578 bereitzustellen.

15. Verwendung der heißgesiegelten Verpackung nach den Ansprüchen 8 bis 10 für medizinische Verpackungsanwendungen.

**Revendications**

1. Film multicouche thermoscellable (A) comprenant :

   a) une couche de support comprenant au moins une couche polymère ;
   b) une couche de scellage pelable de mélange de polymères, ledit mélange comprenant :

- 50 à 80 % en poids d'un polymère d'éthylène ;
- 10 à 40 % en poids d'un polymère de styrène ; et
- 5 à 30 % en poids d'un copolymère séquencé de styrènebutadiène, **caractérisé en ce que** la moyenne de la conformabilité élastique ou de conservation à une fréquence de 10 rad/s ($J'_{10}$) et de la conformabilité élastique ou de conservation à une fréquence de 100 rad/s ($J'_{100}$) est d'au moins $10^{-5}$ Pa$^{-1}$, de préférence d'au moins 12 $10^{-6}$ Pa$^{-1}$, mesurée à une température de 160 °C sur un rhéomètre à plaque/plaque dynamique pour un diamètre de plaque de 20 mm et un écartement de matrice de 1,8 mm, dans lequel :

$$J' = (1/G')/(1 + \tan^2\delta)$$

avec :

tan 5 = G''/G' ;
G'' étant le module visqueux ou de perte ; et
G' étant le module élastique ou de conservation.

2. Film multicouche thermoscellable (A) selon la revendication 1, dans lequel la couche de support (a) comprend au moins une couche de polymère sélectionnée dans le groupe constitué par le polyamide, le polyester, le polycarbonate, le polychlorure de vinyle, le polypropylène, le polyéthylène basse densité, le polyéthylène moyenne densité, un copolymère de polyester-glycol et l'éthylène-acétate de vinyle.

3. Film multicouche thermoscellable (A) selon la revendication 1 ou 2, dans lequel le mélange de polymères de la couche de scellage pelable (b) comprend :

- 50 à 80 % en poids de polyéthylène, de préférence du polyéthylène basse densité ;
- 10 à 40 % en poids d'un polystyrène ; et
- 5 à 30 % en poids d'un copolymère séquencé de styrène-butadiène dans lequel la teneur en styrène est comprise entre 10 et 85 % en poids, de préférence entre 15 et 80 % en poids, de manière davantage préférée entre 20 et 75 % en poids de composant styrène.

4. Film multicouche thermoscellable (A) selon l'une quelconque des revendications précédentes, **caractérisé en ce que** la couche de scellage pelable (b) représente 25 % ou moins, de préférence 20 % ou moins, de manière davantage préférée 15 % ou moins de l'épaisseur totale de (A).

5. Film multicouche thermoscellable (A) selon l'une quelconque des revendications précédentes, dans lequel l'épaisseur de la couche de scellage pelable (b) est comprise entre 2 et 15 $\mu$m, de préférence entre 3 et 10 $\mu$m.

6. Film multicouche thermoscellable (A) selon l'une quelconque des revendications précédentes, dans lequel la couche de scellage pelable (b) a un pourcentage de limpidité d'au moins 30 %, de préférence d'au moins 35 %, de manière davantage préférée d'au moins 40 % et un pourcentage de voile inférieur à 70 %, de préférence inférieur à 65 %, de manière davantage préférée inférieur à 60 %, dans lequel la limpidité et le voile sont mesurés selon la norme ASTM D-1003.

7. Film multicouche thermoscellable (A) selon l'une quelconque des revendications précédentes, dans lequel la couche de scellage pelable (b) a une augmentation de limpidité d'au moins 200 %, de préférence d'au moins 230 %, de manière davantage préférée d'au moins 260 % et une réduction de voile d'au moins 20 %, de préférence d'au moins 24 %, de manière davantage préférée d'au moins 28 % par rapport aux valeurs de limpidité et de voile d'une couche de scellage pelable de mélange de polymères, de la même épaisseur, ledit mélange comprenant :

- 50 à 80 % en poids d'un polymère d'éthylène ;
- 10 à 40 % en poids d'un polymère de styrène ; et
- 5 à 30 % en poids d'un copolymère séquencé de styrène-butadiène-styrène, **caractérisé en ce que** la moyenne de la conformabilité élastique ou de conservation à une fréquence de 10 rad/s ($J'_{10}$) et de la conformabilité élastique ou de conservation à une fréquence de 100 rad/s ($J'_{100}$) est inférieure à $10^{-5}$ Pa$^{-1}$, de préférence inférieure à 9 $10^{-6}$ Pa$^{-1}$, mesurée à une température de 160 °C sur un rhéomètre à plaque/plaque dynamique,

dans lequel la limpidité et le voile sont mesurés conformément à la norme ASTM D-1003.

**8.** Emballage thermoscellé comprenant le film multicouche thermoscellable (A) selon l'une quelconque des revendications précédentes et un substrat (B), en contact avec la couche thermoscellable (b), ledit substrat (B) comprenant au moins une couche sélectionnée dans le groupe constitué par le polyamide, le polyester, le polycarbonate, le polychlorure de vinyle, le polypropylène, le polyéthylène, le polyacrylonitrile, un copolymère de polyester-glycol, l'éthylène-acétate de vinyle et le polystyrène choc.

**9.** Emballage thermoscellé selon la revendication 8, dans lequel la couche de substrat (B) en contact avec la couche de scellage (b) du film multicouche thermoscellable (A) est sélectionnée dans le groupe constitué par le polyéthylène basse densité, le polyéthylène moyenne densité, le polyéthylène haute densité, le polyéthylène téréphtalate modifié par glycol et la couche de scellage (b).

**10.** Emballage thermoscellé selon la revendication 8 ou 9, **caractérisé en ce que** la résistance au pelage pour séparer le film multicouche (A) et le substrat (B) est de 3,5 N/10 mm ou moins, de préférence de 3,0 N/10 mm ou moins, de manière davantage préférée de 2,5 N/10 mm ou moins, la rupture étant interne à la couche de scellage pelable (b), les forces de pelage étant mesurées à un angle de pelage de 90° avec une vitesse d'ouverture de 300 mm/min.

**11.** Procédé de production de l'emballage thermoscellé selon l'une quelconque des revendications 8 à 10, comprenant la mise en contact du substrat (B) avec la couche de thermoscellage (b) du film multicouche thermoscellable (A) des revendications 1 à 7 et le scellage à une température comprise entre 100 et 180 °C, de préférence entre 120 et 160 °C avec un temps de séjour compris entre 0,2 et 3 secondes, de préférence entre 0,5 et 2 secondes et une pression comprise entre 100 et 600 kPa, de préférence entre 150 et 400 kPa, et le refroidissement de l'emballage thermoscellé.

**12.** Procédé selon la revendication 11, comprenant l'étape supplémentaire consistant à préparer le film multicouche thermoscellable (A), tel que défini dans la revendication 1, par co-extrusion de l'au moins une couche de polymère de la couche de support (a) et du mélange de polymères de la couche de scellage pelable (b), ledit mélange de polymères étant obtenu à partir d'une extrusion à cisaillement élevé.

**13.** Procédé selon la revendication 11 ou 12, comprenant l'étape supplémentaire consistant à soumettre la couche de scellage pelable (b) à un traitement au plasma, de préférence un traitement au plasma corona, avant la mise en contact avec le substrat (B).

**14.** Procédé selon l'une quelconque des revendications 11 à 13, dans lequel le traitement corona est ajusté pour fournir une énergie de surface d'au moins 36 mN/m, de préférence d'au moins 38 mN/m, plus d'au moins 40 mN/m, selon la norme ASTM D2578.

**15.** Utilisation de l'emballage thermoscellé selon les revendications 8 à 10, pour une application d'emballage médical.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6245176 B1
- EP 0258527 A1
- EP 0746468 A1
- GB 1350290 A
- EP 0024270 A
- WO 0115897 A
- WO 2005005540 A
- EP 0971819 A1
- EP 1312470 A

### Non-patent literature cited in the description

- **FOLLOWING J.D. FERRY**. Viscoelastic Properties of Polymers. J. Wiley & Sons, 1980, 13